# EUROPEAN PATENT APPLICATION

(11) **EP 4 725 721 A1**
(43) Date of publication of application: **15.04.2026**
(21) Application number: 25196322.9
(22) Date of filing: 18.08.2025
(51) Int. Cl.: B60D 1/60, B62D 13/00, B62D 13/06

(54) **DRIVING ASSISTANCE DEVICE**

(30) Priority: 11.10.2024 JP 2024178635
(71) Applicant: AISIN CORPORATION, Aichi 448-8650 (JP)
(72) Inventor: YAMAMOTO, Kinji, Kariya, Aichi, 448-8650 (JP); WATANABE, Kazuya, Kariya, Aichi, 448-8650 (JP); MORI, Yuki, Kariya, Aichi, 448-8650 (JP)
(74) Representative: TBK

(57) **Abstract**

A driving assistance device (1) for assisting a vehicle operation performed by a user in a towing vehicle (2) displays a vehicle selection screen (71) for selecting a towed vehicle to be towed by the towing vehicle from one or a plurality of candidate vehicles (40) on a display device (15), sets one of the candidate vehicles selected by the user on the vehicle selection screen as the towed vehicle to be towed by the towing vehicle and performs assistance using information on the towed vehicle, and displays a candidate vehicle image (41) that is an image obtained by imaging, for each of the candidate vehicles which is a selection candidate on the vehicle selection screen, the candidate vehicle by an imaging device (9).

## Description

### TECHNICAL FIELD

This disclosure relates to a driving assistance device that assists driving of a vehicle.

### BACKGROUND DISCUSSION

In the related art, there has been known a driving assistance device that performs various driving assistance such as assisting a driving operation of a vehicle in various scenes, performing a part or all of the driving operations instead of a driver, and guiding information for performing the driving operation. For example, in parking assistance, which is one of the above driving assistance, there has been known to calculate a travel trajectory for parking and perform guidance and vehicle control such that parking is performed according to the calculated travel trajectory.

Here, in particular, when the driving assistance is performed on a towing vehicle (tractor) towing a towed vehicle (trailer), it is necessary to perform the driving assistance in consideration of not only behaviors of the towing vehicle but also behaviors of the towed vehicle. Therefore, it is necessary for a device side to grasp information on the towed vehicle connected to the towing vehicle. Examples of the information on the towed vehicle include a position of a coupler and a wheelbase of the towed vehicle. Therefore, JP 2020-37301A discloses a technique in which, in a control device that performs steering angle control for preventing an oscillating motion occurring during traveling of a towing vehicle towing a towed vehicle, information on the towed vehicle is registered in a memory in advance, and a device side acquires the information by reading the registered information from the memory.

Here, the position of the coupler and the wheelbase are unique parameters different for each towed vehicle. Therefore, for example, when the information on the towed vehicle is stored in the memory in advance as in JP 2020-37301A (paragraph 0016) (Reference 1), particularly when there is a possibility of towing a plurality of towed vehicles, it is necessary to store the information on the plurality of towed vehicles in advance, respectively. When the driving assistance is performed, the information on the towed vehicle which is a towing target needs to be selected from the stored information on the plurality of towed vehicles.

A need thus exists for a driving assistance device capable of easily selecting a towed vehicle from a plurality of candidate vehicles on a vehicle selection screen displayed on a display device when performing driving assistance for a towing vehicle towing the towed vehicle.

### SUMMARY

According to an aspect of this disclosure, a driving assistance device for assisting a vehicle operation performed by a user in a towing vehicle displays a vehicle selection screen for selecting a towed vehicle to be towed by the towing vehicle from one or a plurality of candidate vehicles on a display device, sets one of the candidate vehicles selected by the user on the vehicle selection screen as the towed vehicle to be towed by the towing vehicle and performs assistance using information on the towed vehicle, and displays a candidate vehicle image that is an image obtained by imaging, for each of the candidate vehicles which is a selection candidate on the vehicle selection screen, the candidate vehicle by an imaging device.

According to the driving assistance device of this disclosure having the above configuration, when driving assistance is performed on a towing vehicle that is towing a towed vehicle, by displaying an image obtained by imaging a candidate vehicle by an imaging device for each candidate vehicle on a vehicle selection screen displayed on a display device, it is possible to easily select a towed vehicle from among a plurality of candidate vehicles. As a result, it is possible to improve operability related to vehicle selection.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a diagram illustrating a towing vehicle and a towed vehicle according to the present embodiment;
Fig. 2 is an enlarged view of a vicinity of a towing device of the towing vehicle;
Fig. 3 is a diagram illustrating movements of the towing vehicle and the towed vehicle in a state in which a hitch ball and a coupler are connected;
Fig. 4 is a block diagram illustrating a configuration of a driving assistance device according to the present embodiment;
Fig. 5 is a diagram illustrating an example of information stored in a registration information DB;
Fig. 6 is a flowchart of a candidate vehicle registration processing program according to the present embodiment;
Fig. 7 is a diagram illustrating an overwrite target selection screen displayed on a liquid crystal display;
Fig. 8 is a diagram illustrating a vehicle registration screen displayed on the liquid crystal display;
Fig. 9 is a diagram illustrating calibration processing;
Fig. 10 is a diagram illustrating a screen displayed on the liquid crystal display when the calibration processing is executed;
Fig. 11 is a diagram illustrating an image confirmation screen displayed on the liquid crystal display;
Fig. 12 is a diagram illustrating another example of the image confirmation screen displayed on the liquid crystal display;
Fig. 13 is a flowchart of a candidate vehicle update processing program according to the present embodiment;
Fig. 14 is a diagram illustrating an update target selection screen displayed on the liquid crystal display;
Fig. 15 is a diagram illustrating an information item selection screen displayed on the liquid crystal display;
Fig. 16 is a flowchart of a candidate vehicle selection processing program according to the present embodiment; and
Fig. 17 is a diagram illustrating a vehicle selection screen displayed on the liquid crystal display.

### DETAILED DESCRIPTION

Hereinafter, a driving assistance device according to a specific embodiment disclosed here will be described in detail with reference to the drawings.

### Description of Towing Vehicle and Towed Vehicle

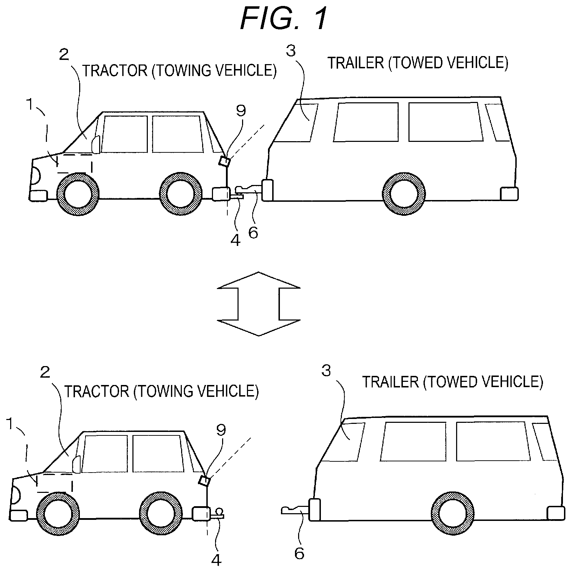

First, a towing vehicle (tractor) 2 equipped with a driving assistance device 1 and a towed vehicle (trailer) 3 towed by the towing vehicle 2 according to the present embodiment will be described below. Fig. 1 is a diagram illustrating the towing vehicle 2 and the towed vehicle 3, in which an upper diagram illustrates a state in which the towing vehicle 2 and the towed vehicle 3 are connected to each other, and a lower diagram illustrates a state in which the towing vehicle 2 and the towed vehicle 3 are separated from each other before being connected to each other.

Here, the towing vehicle 2 is also called a tractor, and is able to travel while towing the towed vehicle 3. The towing vehicle 2 may be, for example, an automobile (an internal combustion engine automobile) using an internal combustion engine (an engine, or the like) as a drive source, an automobile (an electric automobile, a fuel cell automobile, or the like) using an electric motor (a motor or the like) as a drive source, or an automobile (a hybrid automobile) using both of the internal combustion engine and the electric motor as a drive source. The vehicle type is not limited, and the towing vehicle 2 may be a standard vehicle or a large commercial tractor (trailer head) as long as the towing vehicle 2 is equipped with a towing device 4 to be described later.

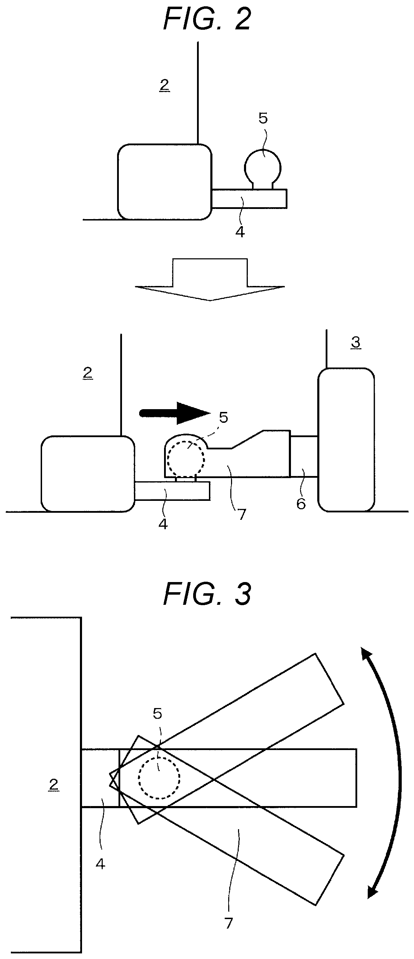

As illustrated in Fig. 1, the towing device 4 (hitch) for towing the towed vehicle 3 is disposed to protrude from a lower portion of, for example, a central portion of a rear bumper of the towing vehicle 2 in a vehicle width direction. Fig. 2 is an enlarged view of the vicinity of the towing device 4.

As illustrated in Fig. 2, the towing device 4 is fixed to, for example, a frame of the towing vehicle 2. As an example, the towing device 4 includes a hitch ball 5 having a spherical tip end portion erected in a vertical direction (vehicle up-down direction), a coupler 7 provided at a tip end portion of a connection member 6 fixed to the towed vehicle 3 covers the hitch ball 5, thereby connecting the hitch ball 5 and the coupler 7. As a result, the towing vehicle 2 and the towed vehicle 3 are connected. However, the shapes of the hitch ball 5 and the coupler 7 are not limited to the shapes illustrated in Fig. 2, and may be any shape as long as the towing vehicle 2 and the towed vehicle 3 can be connected. The towing device 4 is a member that is fixed to the towing vehicle 2 but can be removed by using a tool or the like, and can be replaced according to, for example, the towed vehicle 3 which is a towing target.

Then, in the state in which the hitch ball 5 and the coupler 7 are connected to each other, the hitch ball 5 transmits the front-rear and left-right movements to a towed vehicle 3 (a connection member 6) side according to the movement of the towing vehicle 2. As illustrated in Fig. 3, even when in the state in which the coupler 7 is connected to the hitch ball 5, an angle of the coupler 7 with respect to the hitch ball 5 can be freely changed (with an upper limit), and the towed vehicle 3 can swing (turn) in the vehicle width direction with respect to the towing vehicle 2.

As illustrated in Fig. 1, a rear camera (imaging device) 9 is provided on a wall portion of a rear hatch on the rear side of the towing vehicle 2. The rear camera 9 is, for example, a digital camera incorporating an imaging element such as a CCD or a CIS. The rear camera 9 can output video data (captured image data) at a predetermined frame rate. The rear camera 9 includes a wide-angle lens or a fisheye lens, an optical axis direction is set obliquely downward, and a range of, for example, 140° to 220° can be imaged in a horizontal direction. Therefore, the rear camera 9 can output data of a captured image obtained by imaging a wide range including the towed vehicle 3 behind in the state in which the towed vehicle 3 is connected.

The range that can be imaged by the rear camera 9 in the state in which the towed vehicle 3 is connected also includes the towing device 4 and the hitch ball 5 at the rear end portion of the towing vehicle 2. Therefore, The captured image data captured by the rear camera 9 can be used to detect, for example, a connection state (for example, a connection angle (hitch angle), presence or absence of connection, or the like) between the towing vehicle 2 and the towed vehicle 3. As to be described later, an image of the towed vehicle 3 captured by the rear camera 9 can also be used as a candidate vehicle image (thumbnail image) when registering the towed vehicle 3. However, as a unit that detects the connection state between the towing vehicle 2 and the towed vehicle 3, a sensor provided on the towing device 4 may be provided instead of the rear camera 9. In addition to the rear camera 9, a camera that images the front or the side may be provided as an imaging device that images the surroundings of the towing vehicle 2.

Meanwhile, the towed vehicle 3 is also called a trailer and travels while being towed by the towing vehicle 2. Therefore, unlike the towing vehicle 2, basically, there is no engine or motor as a drive source. In addition, there is no steering device (steering system) for changing a wheel direction. For example, a camping trailer having a living space inside or a light trailer carrying a car or a ship is applicable. The towed vehicle 3 includes a main body portion, a plurality of (two in the present embodiment) trailer wheels, the connection member 6, and the coupler 7.

Here, as illustrated in Fig. 1, the connection member 6 is provided at a lower portion of a central portion in the vehicle width direction of the main body portion of the towed vehicle 3, and is disposed to protrude forward (in a traveling direction) from a front end portion of the main body portion.

As illustrated in Fig. 2, the coupler 7 is provided at a front end portion of the connection member 6, and is formed with a spherical recessed portion that covers the hitch ball 5. When the coupler 7 covers the hitch ball 5, the towed vehicle 3 is connected to the towing vehicle 2 in a turnable manner as described above (see Fig. 3). A length and a height from a ground surface of the connection member 6 (that is, a position of the coupler 7 in the towed vehicle 3) vary depending on the type of the towed vehicle 3. In the present embodiment, the coupler 7 is located at least at a position at which the coupler 7 can be connected to the hitch ball 5 provided in the towing vehicle 2.

A relationship between the towing vehicle 2 and the towed vehicle 3 is not one to one, and for example, the towing vehicle 2 can connect and tow the towed vehicle 3 freely selected from a plurality of the towed vehicles 3 according to a traveling purpose. For example, it is possible to freely select, for example, to connect a camping trailer when going on a trip, or to connect a light trailer when carrying a car or a ship. That is, the connection member 6 provided in the towed vehicle 3 is not a member unique to each vehicle, and is a versatile member common to, for example, each vehicle manufacturer.

In the driving assistance device 1 according to the present embodiment, it is possible to register in advance information (for example, a position of a coupler, a trailer wheelbase, or the like) on the towed vehicle 3 that is a candidate to be towed by the towing vehicle 2, and when the towed vehicle 3 is connected to the towing vehicle 2, it is possible to select information on the currently connected towed vehicle 3 from the registered information and to provide appropriate driving assistance according to the towed vehicle 3 currently being towed. More details will be described below.

### Description of Driving Assistance Device

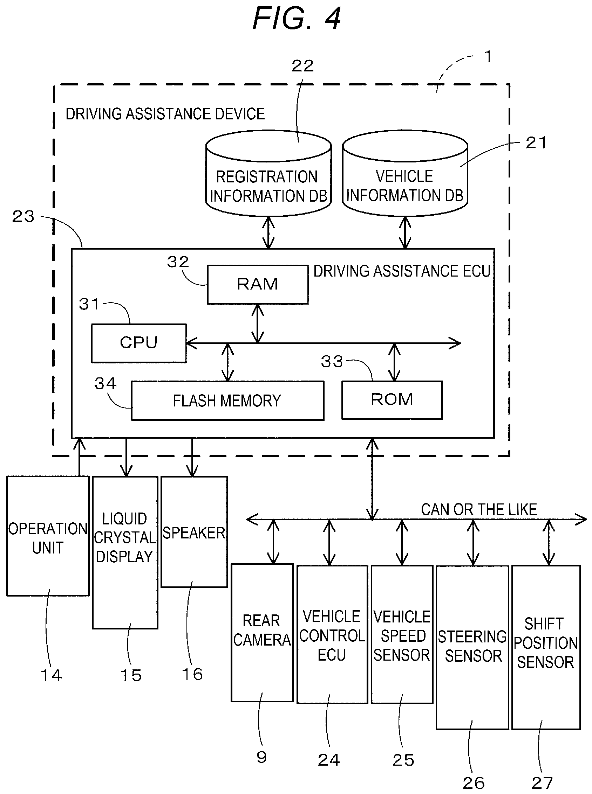

Next, the driving assistance device 1 provided in the towing vehicle 2 will be described. The driving assistance device 1 is a device that assists a vehicle operations performed by a driver in the state in which the towing vehicle 2 is connected to the towed vehicle 3. In the following description, the driving assistance device 1 will be described as a device that performs parking assistance particularly when parking in a predetermined parking space as driving assistance, but the driving assistance device 1 may be, for example, a device that performs, not to limited to parking assistance, exit assistance when exiting from a parking space or traveling assistance related to normal traveling on a road. Fig. 4 is a block diagram illustrating a configuration of the driving assistance device 1 according to the present embodiment.

As illustrated in Fig. 4, the driving assistance device 1 according to the present embodiment includes a vehicle information DB 21 in which various types of data related to the towing vehicle 2 are recorded, a registration information DB 22 in which various types of data registered in advance related to vehicles that are candidates for the towed vehicle 3 are recorded, and a driving assistance ECU 23 that performs various types of arithmetic processing based on input information. The driving assistance device 1 is connected to an operation unit 14 that receives an operation from an occupant (user) of the towing vehicle 2 via an in-vehicle network such as a CAN, a liquid crystal display 15 that displays a captured image of the rear camera 9 and information related to driving assistance such as a vehicle registration screen and a vehicle selection screen to be described later to the occupant of the towing vehicle 2, and a speaker 16 that outputs voice guidance related to driving assistance. The driving assistance device 1 is also connected, via an in-vehicle network such as a CAN, to the rear camera 9 provided on the towing vehicle 2, a vehicle control ECU 24 that performs various types of control on the towing vehicle 2, and various sensors such as a vehicle speed sensor 25, a steering sensor 26, and a shift position sensor 27.

The operation unit 14 is a user interface that is provided on an instrument panel or a handle of the towing vehicle 2 and receives, for example, a registration operation of registering vehicles (hereinafter, referred to as candidate vehicles) that are candidates for the towed vehicle 3, an operation of selecting a target vehicle to be towed from the candidate vehicles, an instruction operation of the occupant in driving assistance, and the like, and includes a plurality of operation switches (not illustrated) such as various keys and buttons. Based on switch signals output by, for example, pressing the switches, the driving assistance ECU 23 performs control to execute various corresponding operations. The operation unit 14 may include a touch panel provided on a front surface of the liquid crystal display 15. A microphone and a voice recognition device may be further included.

The liquid crystal display 15 is a type of display device, is provided on the instrument panel of the towing vehicle 2, and displays the vehicle registration screen for registering candidate vehicles and the vehicle selection screen for selecting a target vehicle to be towed from the candidate vehicles. When the parking assistance is executed, the captured image captured by the rear camera 9, a bird's-eye view image of the surroundings of the vehicle generated based on captured images captured by a plurality of cameras including the rear camera 9, and the like are also displayed. The liquid crystal display 15 may also be used in a navigation device.

The speaker 16 outputs voice guidance for guiding traveling at the time of execution of parking assistance based on an instruction from the driving assistance ECU 23. The speaker 16 may also be used in a navigation device.

The vehicle information DB 21 is a storage unit that stores various types of information on the towing vehicle 2. For example, for the towing vehicle 2, an installation position (height from the ground surface, position in a left-right direction, distance from a vehicle rear end) and an optical axis direction of the rear camera 9, an installation position (height from the ground surface, distance from the vehicle rear end) of the hitch ball 5, a total length, a vehicle width, the wheelbase, a minimum turning radius, and the like are stored. A distance from a rear wheel shaft of the towing vehicle 2 to a connection point between the towing vehicle 2 and the towed vehicle 3 (the position of the hitch ball 5) is also stored. Since the above information is basically fixed information, the information is registered by a person on the vehicle manufacturer side at the time of factory shipment, but since the towing device 4 attached to the towing vehicle 2 is a replaceable member as described above, the information on the hitch ball 5 is information that can be registered by an occupant after factory shipment.

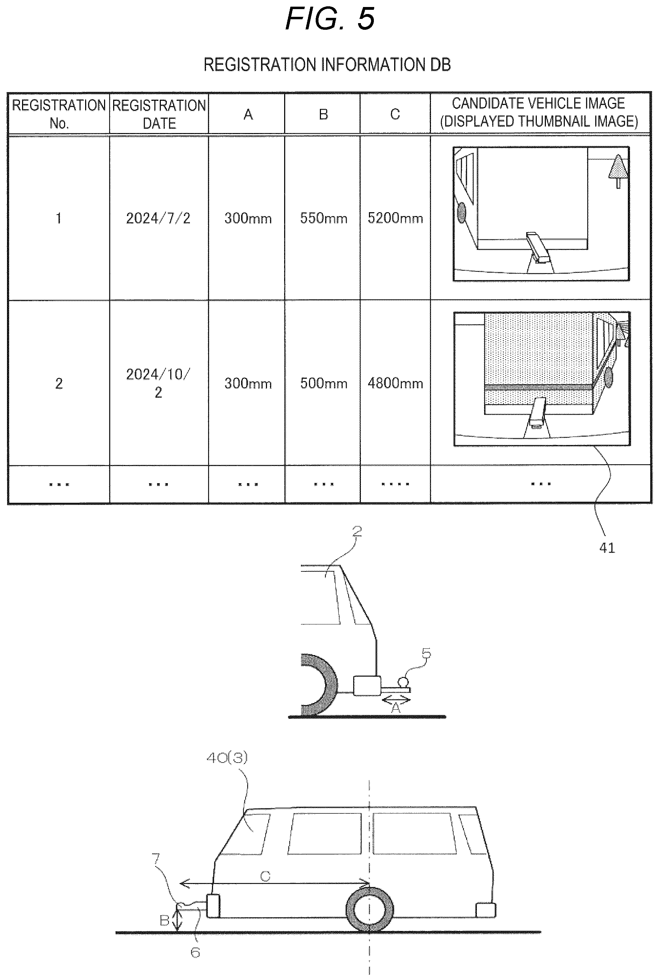

In contrast, the registration information DB 22 is storage unit in which various types of information on the candidate vehicles registered by the occupant are classified and stored for each candidate vehicle. Here, Fig. 5 is a diagram illustrating an example of the information stored in the registration information DB 22.

As illustrated in Fig. 5, the registration information DB 22 stores, for each candidate vehicle 40 (corresponding to the towed vehicle 3 when being connected to the towing vehicle 2), a registration date on which information on the candidate vehicle 40 is registered, a distance A from the vehicle rear end to the installation position of the hitch ball 5 for the towing vehicle 2, a height B from the ground surface of the coupler 7 for the candidate vehicle 40, and a distance (corresponding to the trailer wheelbase) C from a rotation center of the candidate vehicle 40 to the connection point (position of the hitch ball 5) between the towing vehicle 2 and the candidate vehicle 40. Here, the rotation center of the candidate vehicle 40 is also expressed as a reference point, and when the candidate vehicle 40 has one axis (two wheels), an axis center is the rotation center. In contrast, when the candidate vehicle 40 has two axes (four wheels), the rotation center is present between the two axes (the position thereof varies depending on the load distribution). Although the distance A from the vehicle rear end to the installation position of the hitch ball 5 for the towing vehicle 2 is originally information on the towing vehicle 2, the distance A is stored as the information on the candidate vehicle 40 in the present embodiment because the towing device 4 is a replaceable member according to the towed vehicle 3 to be towed. In addition to the above information, a position of the coupler 7 in the left-right direction, a distance from the vehicle front end to the coupler 7, and a total length, a vehicle width, a minimum turning radius, and the like of the candidate vehicle 40 may be provided in the information on the candidate vehicle 40.

In the registration information DB 22, a candidate vehicle image 41 is also stored in association with the information on the candidate vehicle 40. The candidate vehicle image 41 is an image of the target candidate vehicle 40 captured by the rear camera 9 provided in the towing vehicle 2. The candidate vehicle image 41 is used as a thumbnail image in the vehicle selection screen for selecting a target vehicle to be towed from among the candidate vehicles 40 as to be described later.

The information on the candidate vehicle 40 stored in the registration information DB 22 is input by an operation of the occupant of the towing vehicle 2 which is performed according to the vehicle registration screen displayed on the liquid crystal display 15 as to be described later. Each time one candidate vehicle 40 is added, the information thereon is input and registered (stored) in the registration information DB 22 as the information on the candidate vehicle 40. An upper limit number (for example, three) is set for the number of candidate vehicles that can be registered in the registration information DB 22, and when the number of candidate vehicles that can be registered exceeds the upper limit number, the occupant can select and overwrite information on unnecessary candidate vehicles 40. The registered information can also be updated (corrected) by a user operation. As a storage medium of the vehicle information DB 21 and the registration information DB 22, for example, a memory card can be used. The storage medium may be provided in a storage area (for example, RAM or flash memory) in the driving assistance ECU 23.

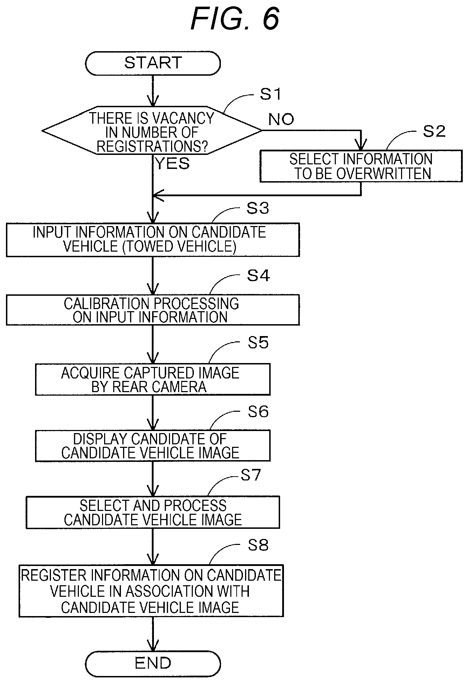

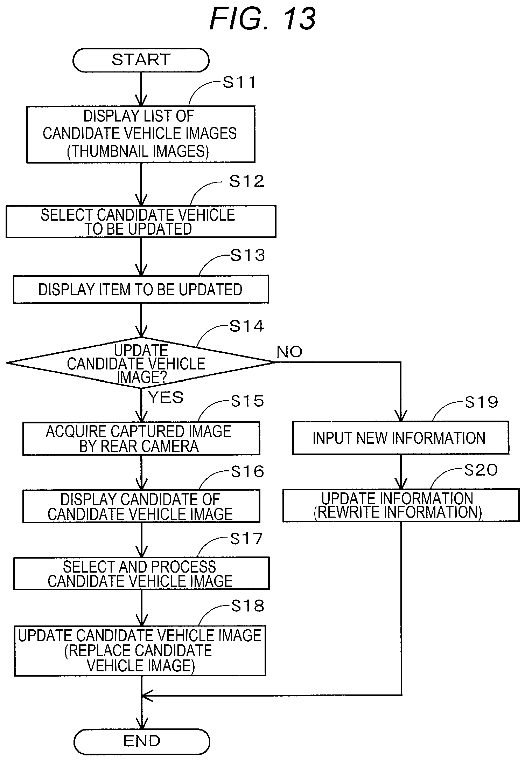

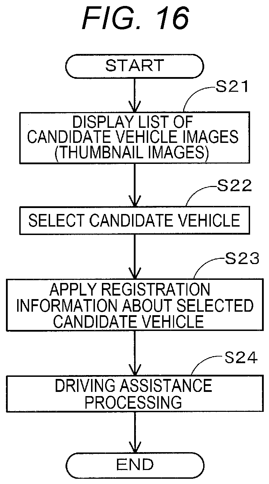

The driving assistance electronic control unit (ECU) 23 is an electronic control unit that performs overall control of the driving assistance device 1, and includes a CPU 31 serving as an arithmetic device and a control device and internal storage devices such as a RAM 32 that is used as a working memory when the CPU 31 performs various types of arithmetic processing and that stores, for example, trajectory data when a parking trajectory is generated, a ROM 33 that stores a candidate vehicle registration processing program (see Fig. 6), a candidate vehicle update processing program (see Fig. 13), a candidate vehicle selection processing program (see Fig. 16), and the like, in addition to a control program, and a flash memory 34 that stores a program read from the ROM 33. The driving assistance ECU 23 executes various functions as processing algorithms. For example, the functions include a function of displaying the vehicle selection screen for selecting the target towed vehicle 3 to be towed by the towing vehicle 2 from one or a plurality of candidate vehicles 40 on the liquid crystal display 15, a function of using the candidate vehicle 40 selected by an occupant (user) on the vehicle selection screen as the target towed vehicle 3 to be towed by the towing vehicle 2 to perform assistance using information on the towed vehicle 3, a function of acquiring the information on the candidate vehicle 40, a function of calibrating the acquired information on the candidate vehicle 40 by achieving predetermined travelling in the state in which the candidate vehicle 40 is connected to the towing vehicle 2, and a function of registering the information on the candidate vehicle 40 in association with the candidate vehicle image 41.

The vehicle control ECU 24 is an electronic control unit that controls the towing vehicle 2. The vehicle control ECU 24 is connected to drive units of the vehicle such as a steering, a brake, an accelerator, and a transmission, and in the present embodiment, for example, when the parking assistance for assisting parking into a parking space is executed, automatic driving assistance for the towing vehicle 2 can be implemented by controlling the drive units. Specifically, the driving assistance ECU 23 transmits various types of assistance information on automatic driving assistance generated by the driving assistance device 1 to the vehicle control ECU 24 via a CAN. Then, the vehicle control ECU 24 performs the automatic driving assistance after the assistance is started by using the received various types of assistance information. The assistance information includes, for example, information indicating a travel trajectory recommended for traveling of the towing vehicle 2 or the towed vehicle 3, and information indicating a vehicle speed or a steering angle when traveling along the travel trajectory. In the automatic driving assistance, only the steering operation may be automatically performed, or the drive source, the brake, and the transmission may be automatically controlled. It is not essential for the towing vehicle 2 to be equipped with the above automatic driving assistance, and the towing vehicle 2 may be a vehicle that can only be driven manually. In this case, when the parking assistance is executed, instead of the above automatic driving assistance, steering operation guidance and operation guidance for a brake, an accelerator, and a shift position are performed for travelling along the recommended travel trajectory.

The vehicle speed sensor 25 is an active wheel speed sensor attached to a wheel of the towing vehicle 2, detects a rotation speed of the wheel, and outputs a speed signal. The steering sensor 26 is attached inside a steering device, detects a steering angle when a steering wheel is turned, and outputs a steering angle signal. The shift position sensor 27 is built into a shift lever, and detects which of "P (parking)", "N (neutral)", "R (reverse)", "D (drive)", "2 (second gear)", and "L (low)" the shift position is.

The driving assistance ECU 23 can acquire a current vehicle speed, traveling distance, steering angle, shift position, and the like of the towing vehicle 2 based on the output signals from the various sensors.

### Description of Processing Programs Executed in Driving Assistance Device

Next, the candidate vehicle registration processing program executed by the driving assistance ECU 23 in the driving assistance device 1 having the above configuration will be described with reference to Fig. 6. Fig. 6 is a flowchart of the candidate vehicle registration processing program according to the present embodiment. Here, the candidate vehicle registration processing program is a program that is executed when the operation unit 14 of the towing vehicle 2 receives a predetermined operation for starting registration of information on a candidate vehicle, and that newly registers the information on the candidate vehicle which is a candidate for the towed vehicle 3. It is assumed that the candidate vehicle 40 is connected to the towing vehicle 2. The programs illustrated in the flowcharts in Figs. 6, 13, and 16 are stored in the RAM 32 or the ROM 33 provided in the driving assistance device 1 and are executed by the CPU 31.

First, in step (hereinafter abbreviated as S) 1, the CPU 31 determines whether there is a vacancy in the number of registered information on the candidate vehicle in the registration information DB 22. As illustrated in Fig. 5, the information on the candidate vehicle registered by the occupant of the towing vehicle 2 is classified and stored for each candidate vehicle in the registration information DB 22, and an upper limit number (for example, three) is set in the registration information DB 22 for the number of candidate vehicles whose information can be registered. Therefore, in S1, it is determined whether there is a vacancy for the upper limit number.

Then, if it is determined that there is a vacancy in the number of registered candidate vehicles (YES in S1), the processing proceeds to S3. On the other hand, if it is determined that there is no vacancy in the number of registered candidate vehicles (NO in S1), the processing proceeds to S2.

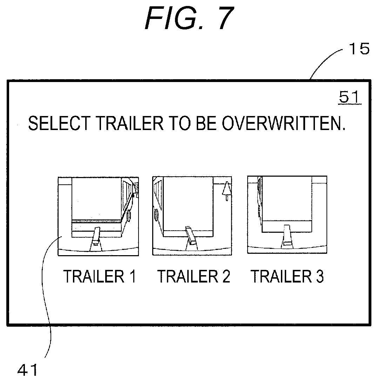

In S2, the CPU 31 selects the information on the candidate vehicle to be overwritten based on the operation of the occupant. For example, in S2, as illustrated in Fig. 7, an overwrite target selection screen 51 is displayed on the liquid crystal display 15. On the overwrite target selection screen 51, the candidate vehicle image 41 is displayed for each candidate vehicle currently registered in the registration information DB 22. That is, a list of candidate vehicle images 41 is displayed as thumbnail images. The occupant can visually recognize the candidate vehicle image 41 displayed on the overwrite target selection screen 51 and then select the information on the candidate vehicle to be overwritten (that is, the information deletion target). That is, by selecting the candidate vehicle image 41 with a touch panel or the like, the information on the candidate vehicle associated with the selected candidate vehicle image 41 is selected as a target to be overwritten. Although only the candidate vehicle image 41 is displayed in the example illustrated in Fig. 7, the information on the candidate vehicle, that is, the registration date and the parameter values of A, B, and C illustrated in Fig. 5 may be displayed together with the candidate vehicle image 41. A vehicle name or a registration name freely set by the user may be displayed.

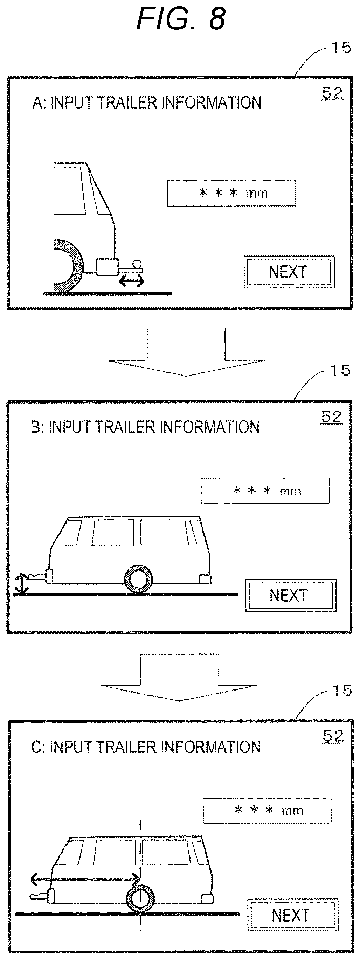

In S3, the CPU 31 inputs information on the candidate vehicle which is newly registered based on the operation of the occupant. For example, in S3, a vehicle registration screen 52 is displayed on the liquid crystal display 15 as illustrated in Fig. 8. The vehicle registration screen 52 first displays an input screen for inputting the distance A from the vehicle rear end to the installation position of the hitch ball 5 for the towing vehicle 2. The occupant selects the "next" icon after inputting the numerical value of the distance A using the operation unit 14. Next, the vehicle registration screen 52 displays an input screen for inputting the height B of the coupler 7 from the ground surface for the candidate vehicle 40. The occupant selects the "next" icon after inputting the numerical value of the height B using the operation unit 14. Finally, the vehicle registration screen 52 displays an input screen for inputting the distance (corresponding to the trailer wheelbase) C from the rotation center of the candidate vehicle 40 to the connection point (position of the hitch ball 5) between the towing vehicle 2 and the candidate vehicle 40. The occupant selects the "next" icon after inputting the numerical value of the distance C using the operation unit 14. As described above, the input of the information on the candidate vehicle is completed. The input units of the distances A to C are metric units in Fig. 8, but may be imperial units.

Subsequently, in S4, the CPU 31 executes calibration processing for the information on the candidate vehicle input in S3. The calibration processing of S4 is processing of performing calibration by actually driving the vehicle to ensure accuracy of the information on the candidate vehicle input in S3. However, it is not essential to execute the calibration processing of S4, and the calibration processing may be executed only when the occupant desires to execute the calibration processing.

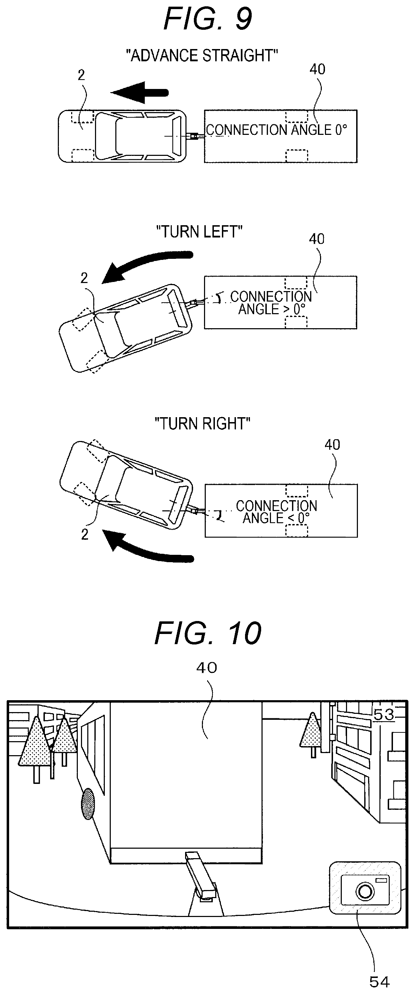

When the calibration processing is started in S4, a traveling instruction is output to the occupant from the liquid crystal display 15 or the speaker 16. For example, instructions of "advance straight", "turn left", and "turn right" are sequentially output. Then, as illustrated in Fig. 9, the occupant of the towing vehicle 2 drives the towing vehicle 2 forward with the handle at a neutral position in response to the instruction "advance straight". In response to the instruction "turn left", the towing vehicle 2 is driven forward with the handle turned left. In response to the instruction "turn right", the towing vehicle 2 is driven forward with the handle turned right. Since it is assumed that the candidate vehicle 40 is connected to the towing vehicle 2, the candidate vehicle 40 moves forward together with the towing vehicle 2.

Then, the CPU 31 acquires the steering angle and the movement distance of the towing vehicle 2, the transition in the orientation of the towed vehicle 3, and the transition in the connection angle (hitch angle) between the towing vehicle 2 and the towed vehicle 3 for the towing vehicle 2 and the candidate vehicle 40 which move in response to the above instructions. The movement distance and the steering angle of the towing vehicle 2 can be acquired from, for example, the vehicle speed sensor 25 or the steering sensor 26. The orientation and the hitch angle of the towed vehicle 3 can be specified from, for example, the captured image by the rear camera 9. Then, whether the values of the distances A to C input in S3 are accurate values is verified based on the steering angle and the movement distance of the towing vehicle 2, the transition in the orientation of the towed vehicle 3, and the transition in the connection angle (hitch angle) between the towing vehicle 2 and the towed vehicle 3, and when there is a deviation between the actual value and the input value, correction is performed. Specifically, the above verification is performed based on a difference between a theoretical value derived from each of the distances A to C and an actual measurement value.

However, the calibration method is not limited to the above method, and a travel trajectory drawn by the towing vehicle 2 moving in response to the instruction and a travel trajectory drawn by the candidate vehicle 40 may be acquired, and whether the values of the distances A to C are accurate values may be verified based on the travel trajectories.

Subsequently, in S5, the CPU 31 acquires the captured image data captured by the rear camera 9 in the state in which the calibration processing is executed in S4. A range that can be imaged by the rear camera 9 in the state in which the candidate vehicle 40 is connected includes at least the candidate vehicle 40. That is, the captured image data acquired in S5 is an image of the candidate vehicle 40 captured by the rear camera 9. The captured image data acquired in S5 may be for only one frame or may be for a plurality of frames. The timing at which the captured image data captured by the rear camera 9 is acquired while the calibration processing is executed may be determined on the device side or may be determined by the occupant. In the case of determining on the device side, the timing is, for example, when the steering angle or the hitch angle reaches a predetermined angle. In contrast, in the case of determining by the occupant, for example, as illustrated in Fig. 10, a real-time captured image 53 captured by the rear camera 9 while the calibration processing is executed in S4 is displayed on the liquid crystal display 15. An imaging icon 54 is displayed on the liquid crystal display 15 in addition to the captured image 53, and in S5, the captured image data captured by the rear camera 9 at a timing when the occupant selects the imaging icon 54 on the touch panel or the like, that is, at a timing instructed by the occupant is acquired.

When the device side determines at which timing the captured image data captured by the rear camera 9 is acquired, it is particularly desirable to acquire the captured image captured in a state in which the steering angle of the towing vehicle 2 is within a predetermined angle range (for example, 15 degrees or less on the left and right). Accordingly, it is possible to acquire the captured image data obtained by imaging the candidate vehicle 40 from a front direction as much as possible. The predetermined angle range may be set based on a user operation. In S5, a plurality of pieces of captured image data may be acquired, and then the occupant may select the captured image data serving as the candidate vehicle image 41.

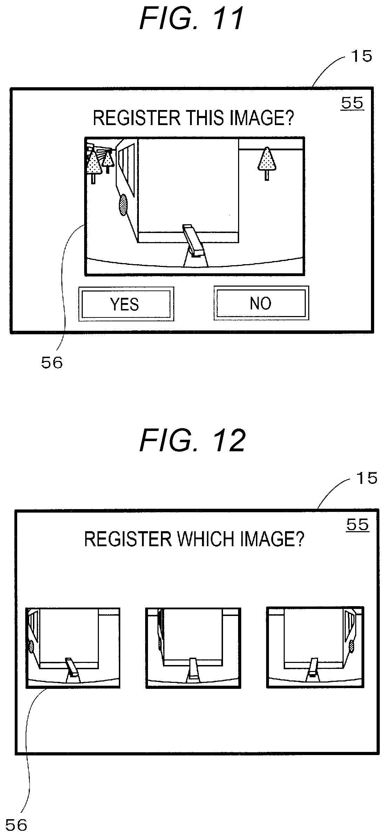

Subsequently, in S6, the CPU 31 displays the captured image data acquired in S5 on the liquid crystal display 15 as a candidate for the candidate vehicle image 41. For example, as illustrated in Fig. 11, an image confirmation screen 55 is displayed on the liquid crystal display 15, and the captured image data (hereinafter referred to as a candidate image 56) acquired in S5 is displayed on the image confirmation screen 55. Although only one candidate image 56 is displayed in the example illustrated in Fig. 11, a plurality of the candidate images 56 captured at different timings may be displayed, and the occupant may select an image serving as the candidate vehicle image 41 from the plurality of candidate images 56.

In particular, in the present embodiment, since the towing vehicle 2 is caused to travel straight, turn right, and turn left in the calibration processing, as illustrated in Fig. 12, the candidate image 56 captured by the rear camera 9 when the towing vehicle 2 travels straight, the candidate image 56 captured by the rear camera 9 when the towing vehicle 2 turns right, and the candidate image 56 captured by the rear camera 9 when the towing vehicle 2 turns left are displayed on the image confirmation screen 55, and the occupant can select an image serving as the candidate vehicle image 41 from these candidate images 56.

If the occupant does not like the displayed candidate image 56, the occupant can select not to register the candidate image 56 as the candidate vehicle image 41. Even when the candidate vehicle image 41 is not registered at this time, only the candidate vehicle image 41 can be additionally registered thereafter.

Next, in S7, the CPU 31 selects an image serving as the candidate vehicle image 41 among the candidate images 56 displayed in S6 based on the operation of the occupant. It is also possible to process the candidate image 56 based on the operation of the occupant and register the processed candidate image 56 as the candidate vehicle image 41. As the process on the candidate image 56, for example, it is possible to trim only a part of the candidate image 56, or it is also possible to enlarge or reduce the size thereof. The process on the image is free, and the candidate image 56 may be registered as the candidate vehicle image 41 without being processed.

In S8, the CPU 31 sets the candidate image 56 selected based on the operation of the occupant (in the case of process, the processed image) as the candidate vehicle image 41 obtained by imaging the candidate vehicle 40 which is newly registered this time. Then, the information on the candidate vehicle 40 input in S3 and calibrated as necessary in S4 is stored in the registration information DB 22 in association with the candidate vehicle image 41 (Fig. 5). The candidate vehicle image 41 is used as a thumbnail image in a vehicle selection screen for selecting a vehicle to be towed from among the candidate vehicles 40 as to be described later.

When the information on the candidate vehicle 40 to be overwritten is designated based on the operation of the occupant in S2, the information on the candidate vehicle 40 designated by the user is deleted, and then information on a new candidate vehicle 40 is registered.

In the example described above, the candidate vehicle image 41 is basically acquired and registered based on the operation of the occupant of the towing vehicle 2, but these pieces of processing may be automatically performed on the device side to reduce the burden on the occupant. For example, in the state in which the calibration processing is performed in S4, a part or all of the image obtained by imaging the candidate vehicle 40 may be automatically acquired as the candidate vehicle image 41 without being triggered by the operation of the occupant, the processing of S6 and S7 may be omitted, and the information on the candidate vehicle 40 input in S3 may be automatically registered in association with the acquired candidate vehicle image 41. The process of the candidate image 56 in S7 can also be automatically performed into an image in which the candidate vehicle 40 provided in the candidate image 56 is easily identified by using, for example, Al.

Next, a candidate vehicle update processing program executed by the driving assistance ECU 23 in the driving assistance device 1 will be described with reference to Fig. 13. Fig. 13 is a flowchart of the candidate vehicle update processing program according to the present embodiment. Here, the candidate vehicle update processing program is a program that is executed when a predetermined operation is received by the operation unit 14 of the towing vehicle 2 and updates (changes) the information (including the candidate vehicle image 41) on the candidate vehicle registered in the candidate vehicle registration processing program (see Fig. 6). When the candidate vehicle update processing program is executed, the candidate vehicle 40 may or may not be connected to the towing vehicle 2.

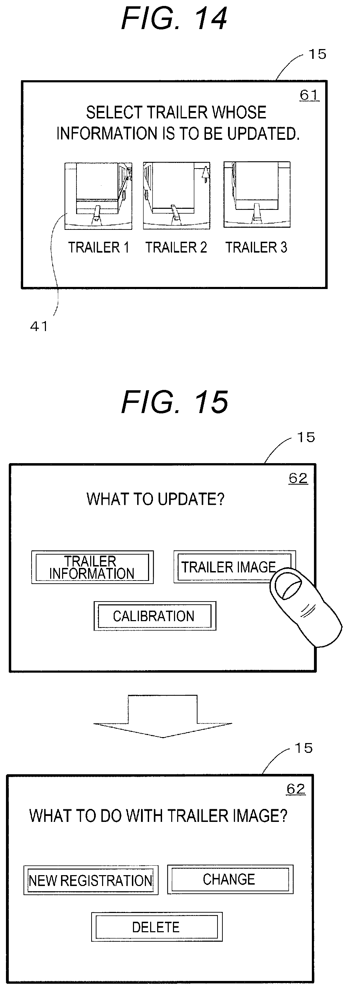

First, in S11, the CPU 31 displays a list of the candidate vehicles 40 currently registered in the registration information DB 22. For example, in S11, an update target selection screen 61 is displayed on the liquid crystal display 15 as illustrated in Fig. 14. The update target selection screen 61 displays the candidate vehicle image 41 for each candidate vehicle currently registered in the registration information DB 22. That is, a list of the candidate vehicle images 41 is displayed as thumbnail images. The occupant can visually recognize the candidate vehicle image 41 displayed on the update target selection screen 61 and then select the information on the candidate vehicle to be updated (that is, the information update target). Although only the candidate vehicle image 41 is displayed in the example illustrated in Fig. 14, the information on the candidate vehicle, that is, the registration date and the parameter values of A, B, and C illustrated in Fig. 5 may be displayed together with the candidate vehicle image 41. A vehicle name or a registration name freely set by the user may be displayed.

Thereafter, in S12, the CPU 31 selects the information on the candidate vehicle whose information is to be updated based on the operation of the occupant. Specifically, when the occupant selects the candidate vehicle image 41 on the update target selection screen 61 using a touch panel or the like, the information on the candidate vehicle associated with the selected candidate vehicle image 41 is selected as the update target.

Next, in S13, the CPU 31 selects an item of the information to be updated among the information on the candidate vehicle selected in S12 based on the operation of the occupant. For example, in S13, an information item selection screen 62 is displayed on the liquid crystal display 15 as illustrated in Fig. 15. The information item selection screen 62 displays three icons of "trailer information", "trailer image", and "calibration", and for example, when the occupant wants to correct the values of the distances A to C, the occupant selects the icon of "trailer information". When the occupant wants to replace or newly register the candidate vehicle image 41, the occupant selects the icon of "trailer image". When the occupant wants to execute the calibration processing of S4 again, the occupant selects the icon of "calibration".

Then, if the candidate vehicle image 41 among the information on the candidate vehicle selected in S12 is particularly updated (YES in S14), three icons of "new registration", "change", and "deletion" are further displayed on the information item selection screen 62. For example, when the occupant wants to newly register the candidate vehicle image 41 with respect to the information on the candidate vehicle for which the candidate vehicle image 41 is not registered, the occupant selects the icon of "new registration". When the occupant wants to replace the already registered candidate vehicle image 41 with another image, the occupant selects the icon of "change". When the occupant wants to delete the already registered candidate vehicle image 41, the occupant selects the icon of "deletion". Since the "deletion" is only processing of deleting the candidate vehicle image 41 registered in the registration information DB 22 (information other than the candidate vehicle image 41, for example, the values of the distances A to C remain), the description thereof will be omitted.

On the other hand, if "new registration" or "change" is selected, in S15, the CPU 31 acquires captured image data in which the candidate vehicle 40 for which the candidate vehicle image 41 is to be updated is imaged. The range that can be imaged by the rear camera 9 in the state in which the candidate vehicle 40 is connected includes at least the candidate vehicle 40. That is, the captured image data acquired in S15 is an image captured by the rear camera 9 in the state in which the candidate vehicle 40 whose information is to be updated is connected. For example, there is a captured image captured by the rear camera 9 in a state in which parking assistance of the candidate vehicle 40 whose information is to be updated in the past is performed. However, since it is possible to image the candidate vehicle 40 even when it is not connected, as long as the candidate vehicle is close enough to be connected, it is not essential that the candidate vehicle is connected.

The captured image data acquired in S15 may be for only one frame or may be for a plurality of frames. The timing at which the captured image data captured by the rear camera 9 is acquired while the parking assistance is executed may be determined on the device side or may be determined by the occupant. In the case of determining on the device side, the timing is, for example, when the steering angle or the hitch angle reaches a predetermined angle. In contrast, in the case of determining by the occupant, for example, as illustrated in Fig. 10, the real-time captured image 53 captured by the rear camera 9 while the parking assistance is executed is displayed on the liquid crystal display 15. The imaging icon 54 is displayed on the liquid crystal display 15 in addition to the captured image 53, and in S15, the captured image data captured by the rear camera 9 at a timing when the occupant selects the imaging icon 54 on the touch panel or the like, that is, at a timing instructed by the occupant is acquired.

When the device side determines at which timing the captured image data captured by the rear camera 9 is acquired, it is particularly desirable to acquire the captured image captured in the state in which the steering angle of the towing vehicle 2 is within a predetermined angle range (for example, 15 degrees or less on the left and right). Accordingly, it is possible to acquire the captured image data obtained by imaging the candidate vehicle 40 from a front direction as much as possible. The predetermined angle range may be set based on a user operation.

Subsequently, in S16, the CPU 31 displays the captured image data acquired in S15 on the liquid crystal display 15 as a new candidate for the candidate vehicle image 41. For example, as illustrated in Fig. 11, the image confirmation screen 55 is displayed on the liquid crystal display 15, and the captured image data (candidate image 56) acquired in S15 is displayed on the image confirmation screen 55. Although only one candidate image 56 is displayed in the example illustrated in Fig. 11, a plurality of the candidate images 56 captured at different timings may be displayed, and the occupant may select an image serving as a new candidate vehicle image 41 from the plurality of candidate images 56. If the occupant does not like the displayed candidate image 56, the occupant can select not to register the candidate image 56 as the candidate vehicle image 41 (not to update the information).

Next, in S17, the CPU 31 selects an image serving as a new candidate vehicle image 41 among the candidate images 56 displayed in S16 based on the operation of the occupant. It is also possible to process the candidate image 56 based on the operation of the occupant and register the processed candidate image 56 as the candidate vehicle image 41. As the process on the candidate image 56, for example, it is possible to trim only a part of the candidate image 56, or it is also possible to enlarge or reduce the size thereof. The process on the image is free, and the candidate image 56 may be registered as a new candidate vehicle image 41 without being processed.

Thereafter, in S18, the CPU 31 registers the candidate image 56 selected based on the operation of the occupant (in the case of process, the processed image) as a new candidate vehicle image 41 of the candidate vehicle 40 whose information is to be updated. That is, among the information registered in the registration information DB 22, only the candidate vehicle image 41 is replaced with a new image in a state in which the information (values of the distances A to C) on the candidate vehicle is maintained.

On the other hand, if it is determined in the determination processing of S14 to update the values of the distances A to C (NO in S14), the processing proceeds to S19.

In S19, the CPU 31 inputs information on the candidate vehicle to be updated based on the operation of the occupant. Since the contents are basically the same as those already described in S3 and Fig. 8, the description thereof will be omitted. All of the values of the distances A to C may be updated, or only a part of the values may be updated.

Thereafter, in S20, the CPU 31 registers the information on the new candidate vehicle 40 input in S19 as new information on the candidate vehicle 40 whose information is to be updated. That is, among the information registered in the registration information DB 22, only the information on the candidate vehicle input in S19 is replaced, and the other information and the candidate vehicle image 41 are maintained.

Although the description of the case in which the user wants to execute the calibration processing again on the information item selection screen 62 is omitted, the processing ends after the processing of S4 is executed.

Next, a candidate vehicle selection processing program executed by the driving assistance ECU 23 in the driving assistance device 1 will be described with reference to Fig. 16. Fig. 16 is a flowchart of the candidate vehicle selection processing program according to the present embodiment. Here, the candidate vehicle selection processing program is, for example, a program that is executed when the towed vehicle 3 is newly connected to the towing vehicle 2 or at a timing when driving assistance in the towing vehicle 2 is started, and selects the towed vehicle 3 to be towed by the towing vehicle 2 from one or a plurality of candidate vehicles 40.

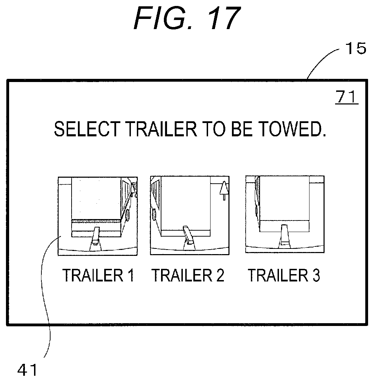

First, in S21, the CPU 31 displays a list of the candidate vehicles 40 currently registered in the registration information DB 22. For example, in S21, a vehicle selection screen 71 is displayed on the liquid crystal display 15 as illustrated in Fig. 17. The vehicle selection screen 71 displays the candidate vehicle image 41 for each candidate vehicle currently registered in the registration information DB 22. That is, a list of the candidate vehicle images 41 is displayed as thumbnail images. The occupant can select a candidate vehicle corresponding to the towed vehicle 3 to be towed after visually recognizing the candidate vehicle image 41 displayed on the vehicle selection screen 71. Although only the candidate vehicle image 41 is displayed in the example illustrated in Fig. 17, the information on the candidate vehicle, that is, the registration date and the parameter values of A, B, and C illustrated in Fig. 5 may be displayed together with the candidate vehicle image 41. A vehicle name or a registration name freely set by the user may be displayed.

Thereafter, in S22, the CPU 31 selects the towed vehicle 3 to be towed from the candidate vehicles registered in the registration information DB 22 based on the operation of the occupant. Specifically, when the occupant selects the candidate vehicle image 41 on the vehicle selection screen 71 using a touch panel or the like, the candidate vehicle corresponding to the selected candidate vehicle image 41 is selected as the towed vehicle 3. At this time, since the occupant of the towing vehicle 2 can select the towed vehicle 3 from among the candidate vehicles using the candidate vehicle image 41 indicating the appearance instead of the name or the numerical value as a clue, it is possible to easily select the towed vehicle 3.

Next, in S23, the CPU 31 reads information on the candidate vehicle selected in S22 (specifically, the values of the distances A to C) from the registration information DB 22, and sets the information as information on the towed vehicle 3 currently towed by the towing vehicle 2.

Thereafter, in S24, the CPU 31 executes various driving assistance such as parking assistance using the information (specifically, the values of the distances A to C) on the towed vehicle 3 set in S23.

Hereinafter, briefly describing the content of the parking assistance performed in the driving assistance device 1 with an example, first, parking target positions of the towing vehicle 2 and the towed vehicle 3 are set using a camera or a sensor, and orientations of the towing vehicle 2 and the towed vehicle 3 and a connection angle (hitch angle) between the towing vehicle 2 and the towed vehicle 3 at a parking start position are acquired. Subsequently, the CPU 31 acquires information on the towing vehicle 2 and on the towed vehicle 3. In particular, the values of the distances A to C set in S23 are acquired as the information on the towed vehicle 3. Thereafter, the CPU 31 generates a travel trajectory from the parking start position to the parking target position using the acquired information. Here, a travel trajectory particularly for performing reverse parking includes a forward section in which the vehicle first moves forward to a turning position appropriate for entering a parking target position at which the vehicle parks such as a parking space, and a reverse section in which the vehicle switches to reverse at the turning position and then moves backward to the parking target position. Then, it is possible to perform parking assistance of the towing vehicle 2 by controlling the drive units based on the generated travel trajectory. Specifically, the steering, the drive source, the brake, and the transmission are controlled such that the towing vehicle 2 moves from the parking start position to the parking target position along the generated travel trajectory. In the automatic driving assistance, only the steering operation may be automatically performed, and the accelerator, the brake, and the shift position operation may be manually performed. It is not essential for the towing vehicle 2 to be equipped with the above automatic driving assistance, and the towing vehicle 2 may be a vehicle that can only be driven manually. In this case, instead of the automatic driving assistance, the steering operation guidance, the brake, the accelerator, and the shift position operation guidance are performed to travel along the generated travel trajectory.

As described in detail above, according to the driving assistance device 1 and the computer program executed by the driving assistance device 1 according to the present embodiment, the driving assistance device 1 for assisting the vehicle operation performed by the occupant (user) in the towing vehicle 2 displays the vehicle selection screen 71 for selecting the towed vehicle 3 to be towed by the towing vehicle 2 from one or a plurality of candidate vehicles **40** on the liquid crystal display 15 (S21), using the candidate vehicle **40** selected by the user on the vehicle selection screen 71 as the towed vehicle 3 to be towed by the towing vehicle 2 and performs assistance using information on the towed vehicle (S23, S24), and displays the candidate vehicle image **41** that is an image obtained by imaging the candidate vehicle by the rear camera 9 for each candidate vehicle which is a selection candidate on the vehicle selection screen 71. Therefore, it is possible to easily select the towed vehicle 3 from the plurality of candidate vehicles. As a result, it is possible to improve operability related to vehicle selection.

The candidate vehicle image **41** displayed on the vehicle selection screen 71 is a part or a whole of an image obtained by imaging the candidate vehicle when the candidate vehicle 40 is connected to a rear side of the towing vehicle 2 by the rear camera 9 provided in the towing vehicle 2 and including the rear side of the towing vehicle 2 in an imaging range. Therefore, there is no need to separately prepare captured images obtained by imaging the candidate vehicle, and it is possible to generate the candidate vehicle images using the imaging device provided in the towing vehicle 2.

Information on the candidate vehicle 40 is acquired (S3), the acquired information on the candidate vehicle is calibrated by causing the towing vehicle 2 to travel in a predetermined manner in a state of being connected with the candidate vehicle 40 (S4), and the candidate vehicle image 41 displayed on the vehicle selection screen 71 is a part or a whole of an image obtained by imaging the candidate vehicle 40 in a state in which traveling for the calibration is performed. Therefore, there is no need to separately provide a device to image the candidate vehicle; and by imaging the candidate vehicle when calibrating the information on the candidate vehicle 40, it is possible to generate the candidate vehicle image along with calibrating the information.

The information on the candidate vehicle 40 is registered in association with the candidate vehicle image 41 (S8), and a list of the candidate vehicle images 41 associated with the information on the candidate vehicle currently registered is displayed on the vehicle selection screen 71 (S21). Therefore, even when there are a large number of candidate vehicles, it is possible to easily display the candidate vehicles, which are currently registered, in an identifiable manner by the candidate vehicle images 41 displayed in the list.

### Appendix

The above embodiment also discloses the following techniques. In the following description, names or expressions of the corresponding configurations in the embodiment and reference numerals used in the drawings are parenthesized for reference. However, the constituent elements of each technique are not limited to the supplementary notes.

### Technique A

The driving assistance device (1) according to claim 2, in which
the candidate vehicle image (41) displayed on the vehicle selection screen (71) is a part or a whole of an image obtained by imaging the candidate vehicle (40) in a state in which traveling with the assistance is performed.

Accordingly, there is no need to separately create an opportunity to image the candidate vehicle, and by imaging the candidate vehicle when assistance on the candidate vehicle 40 is performed, it is possible to generate the candidate vehicle image along with the assistance.

### Technique B

The driving assistance device (1) according to claim 1, in which
a captured image (56) obtained by imaging the candidate vehicle (40) by the imaging device (9) is acquired,
the captured image is processed based on an operation of the user, and
the candidate vehicle image (41) is the captured image processed based on the operation of the user.

Accordingly, it is possible to register the captured image obtained by imaging the candidate vehicle as the candidate vehicle image after performing processes such as trimming, enlargement, or reduction such that the content is more easily identified by the user.

### Technique C

The driving assistance device (1) according to claim 3 or Technique A, in which
the candidate vehicle image (41) displayed on the vehicle selection screen (71) is a part or a whole of an image obtained by imaging the candidate vehicle (40) in a state in which a steering angle of the towing vehicle (2) is within a predetermined angle range, and
the angle range is set based on an operation of the user.

Accordingly, it is possible to register the captured image obtained by imaging the candidate vehicle from a direction desired by the user as the candidate vehicle image. As a result, it is possible to obtain a candidate vehicle image having the content in which the user can easily identify the candidate vehicle.

### Technique D

The driving assistance device (1) according to claim 2, in which
an instruction from the user who performs imaging by the imaging device (9) is received, and
the candidate vehicle image (41) displayed on the vehicle selection screen (71) is a part or a whole of an image captured by the imaging device according to the instruction from the user.

Accordingly, it is possible to register the captured image obtained by imaging the candidate vehicle at any timing instructed by the user as the candidate vehicle image. As a result, it is possible to obtain a candidate vehicle image having the content in which the user can easily identify the candidate vehicle.

### Technique E

The driving assistance device (1) according to claim 1, in which
when there is a plurality of images of the same candidate vehicle captured by the imaging device (9), the candidate vehicle image (41) to be displayed on the vehicle selection screen (71) is selected from the plurality of images based on an operation of the user, and
the selected candidate vehicle image is displayed for each candidate vehicle which is a selection candidate on the vehicle selection screen (71).

Accordingly, when there is a plurality of captured images obtained by imaging the candidate vehicle, it is possible to register the captured image freely selected by the user from among the plurality of captured images as the candidate vehicle image. As a result, it is possible to obtain a candidate vehicle image having the content in which the user can easily identify the candidate vehicle.

### Technique F

The driving assistance device (1) according to claim 4, in which
the candidate vehicle image (41) is replaced with a new image in a state in which the information on the candidate vehicle (40) among the registered information is maintained.

Accordingly, when the candidate vehicle image is to be replaced with another image, there is no need to input the information on the candidate vehicle again, and the burden on the user can be reduced.

### Technique G

The driving assistance device (1) according to claim 4, further comprising:
a storage medium (22) configured to store the registered information, wherein
when information on a new candidate vehicle (40) is registered in a state in which a vacancy space of the storage medium is less than a predetermined capacity, the information on the new candidate vehicle is registered after the information on the candidate vehicle designated by the user is deleted from the information on the currently registered candidate vehicle.

Accordingly, even when the number of candidate vehicles that can be registered reaches the upper limit, it is possible to register information on a new candidate vehicle after deleting information on an unnecessary candidate vehicle.

### Technique H

The driving assistance device (1) according to claim 3, in which
in a state in which the traveling for the calibration is performed, a part or all of an image obtained by imaging the candidate vehicle (40) is acquired as the candidate vehicle image (41),
the acquired information on the candidate vehicle is automatically registered in association with the acquired candidate vehicle image, and
the vehicle selection screen (71) displays a list of the candidate vehicle images associated with the information on the currently registered candidate vehicle.

Accordingly, it is possible to easily select the towed vehicle 3 from among the plurality of candidate vehicles by displaying the candidate vehicle image, and to reduce the operation burden on the user related to the acquisition and registration of the candidate vehicle image as much as possible.

It is to be understood that this disclosure is not limited to the above embodiment, and various improvements and modifications can be made without departing from the scope of this disclosure.

For example, in the present embodiment, an image captured by the rear camera 9 in the state in which the candidate vehicle 40 is connected to the towing vehicle 2 is registered as the candidate vehicle image 41, but as long as the captured image includes the candidate vehicle 40, it does not necessarily have to be an image captured when the candidate vehicle 40 is connected to the towing vehicle 2. Instead of the image captured by the camera provided in the towing vehicle 2, for example, an image of the candidate vehicle 40 acquired from an external server may be registered as the candidate vehicle image 41. For example, it is desirable that the external server stores images obtained by imaging all the candidate vehicles 40 available in the market in a DB in advance.

The driving assistance device 1 according to the present embodiment has been described as a device that performs parking assistance particularly when parking in a predetermined parking space as driving assistance, but the driving assistance device 1 may be, for example, a device that performs, not limited to parking assistance, exit assistance when exiting from a parking space or traveling assistance related to normal traveling on a road. Also in such driving assistance, appropriate assistance can be performed by using information on the candidate vehicle 40 registered in advance in the registration information DB 22 and selected by the occupant.

In the present embodiment, the driving assistance ECU 23 of the driving assistance device 1 executes processing including the candidate vehicle registration processing program (Fig. 6), the candidate vehicle update processing program (Fig. 13), and the candidate vehicle selection processing program (Fig. 16), but the execution subject can be changed as appropriate. For example, a control unit of the liquid crystal display 15, a vehicle control ECU, a control unit of a navigation device, or other in-vehicle devices may execute the processing.

## Claims

1. A driving assistance device (1) for assisting a vehicle operation performed by a user in a towing vehicle (2), wherein
the driving assistance device displays a vehicle selection screen (71) for selecting a towed vehicle to be towed by the towing vehicle from one or a plurality of candidate vehicles (40) on a display device (15),
sets one of the candidate vehicles selected by the user on the vehicle selection screen as the towed vehicle to be towed by the towing vehicle and performs assistance using information on the towed vehicle, and
displays a candidate vehicle image (41) that is an image obtained by imaging, for each of the candidate vehicles which is a selection candidate on the vehicle selection screen, the candidate vehicle by an imaging device (9).

2. The driving assistance device according to claim 1, wherein
the candidate vehicle image displayed on the vehicle selection screen is a part or a whole of an image obtained by imaging the candidate vehicle when the candidate vehicle is connected to a rear side of the towing vehicle by the imaging device provided in the towing vehicle and including the rear side of the towing vehicle in an imaging range.

3. The driving assistance device according to claim 2, wherein
the driving assistance device acquires information on the candidate vehicle, and
calibrates the acquired information on the candidate vehicle by causing the towing vehicle to travel in a predetermined manner in a state of being connected with the candidate vehicle, and
the candidate vehicle image displayed on the vehicle selection screen is a part or a whole of an image obtained by imaging the candidate vehicle in a state in which traveling for the calibration is performed.

4. The driving assistance device according to any one of claims 1 to 3, wherein
the driving assistance device registers information on the candidate vehicle in association with the candidate vehicle image, and
a list of the candidate vehicle images associated with currently registered information on the candidate vehicle is displayed on the vehicle selection screen.
